# EUROPÄISCHE PATENTSCHRIFT

(11) **EP 1 055 015 B1**
(45) Veröffentlichungstag und Bekanntmachung des Hinweises auf die Patenterteilung: **22.05.2002**
(21) Anmeldenummer: 98965594.9
(22) Anmeldetag: 01.12.1998
(51) Int. Cl.: C23C 18/06, C23C 16/04, C23C 14/04, G02B 26/08

(54) **HERSTELLUNGSVERFAHREN FÜR EINE MIKROMECHANISCHE VORRICHTUNG**
METHOD FOR PRODUCING A MICROMECHANICAL DEVICE
PROCEDE DE PRODUCTION D'UN DISPOSITIF MICROMECANIQUE

(30) Priorität: 12.01.1998 DE 19800745
(43) Veröffentlichungstag der Anmeldung: 29.11.2000
(73) Patentinhaber: ROBERT BOSCH GMBH, 70442 Stuttgart (DE)
(72) Erfinder: HIRTREITER, Josef, D-70839 Gerlingen (DE); ELSNER, Bernhard, D-70806 Kornwestheim (DE)
(86) Internationale Anmeldenummer: DE9803521
(87) Internationale Veröffentlichungsnummer: WO9935305

(56) Entgegenhaltungen:
- WO-A-92/03740
- DE-A- 19 732 250
- US-A- 5 382 505
- US-A- 5 526 951

## Beschreibung

### STAND DER TECHNIK

Die vorliegende Erfindung betrifft ein Herstellungsverfahren für eine mikromechanische Vorrichtung, insbesondere für einen mikromechanischen Schwingspiegel.

Obwohl prinzipiell auf beliebige mikromechanische Vorrichtungen anwendbar, werden die vorliegende Erfindung sowie die ihr zugrundeliegende Problematik in bezug auf einen mikromechanischen Schwingspiegel erläutert.

Mikromechanische Schwingspiegel finden beispielsweise Anwendung als Schaltelemente in der optischen Nachrichtenübertragungstechnik oder als Scan-Element zur Ablenkung eines Laserstrahls zur Balkencodeerkennung, zur Raumüberwachung oder als Markierungsinstrument.

Die der vorliegenden Erfindung zugrunde liegende Problematik besteht darin, daß die bisher bekannten mikromechanischen Schwingspiegel schwierig herzustellen und kurzlebig sind. Insbesondere gibt es Temperaturprobleme und Probleme aufgrund von mechanischen Spannungen bei den verwendeten Materialien, wie z. B. Polysilizium. Durch die Verwendung spannungsarmer Galvanikschichten sind insbesondere Spiegelflächen ohne Verwölbung herstellbar.

### VORTEILE DER ERFINDUNG

Das erfindungsgemäße Herstellungsverfahren mit den Merkmalen des Anspruchs 1 weist gegenüber bekannten Lösungsansätzen den Vorteil auf, daß die resultierende mikromechanische Vorrichtung spannungs- und temperaturkompensiert ist, so daß sowohl Freiheit in der Materialauswahl als auch der Wahl der Betriebstemperatur, welche typischerweise im Bereich -40°C bis +130°C liegt, besteht.

Die der vorliegenden Erfindung zugrundeliegende Idee besteht darin, daß die nach "additiver Technik" galvanisch auf dem unmaskierten Bereich der Haftschicht abgeschiedene mikromechanische Vorrichtung nach Entfernen der Opferschicht in dem Verankerungsbereich unterstützt und um mindestens eine Achse verkippbar ist bzw. Torsionsschwingungen ausführen kann. Die Vorteile der additiven Technik lassen sich bei den vorgeschlagenen Designs voll ausschöpfen.

Die additive Technik ermöglicht eine Verringerung der Baugröße der bisherigen mikromechanischen Lösungen und damit verbunden eine Reduzierung des Preises und die Erschließung neuer Einsatzmöglichkeiten. Das erfindungsgemäße Herstellungsverfahren schafft somit kostengünstige, zuverlässige und langlebige mikromechanische Vorrichtungen. Insbesondere erlaubt die additive Technik die Realisierung frei beweglicher Metallstrukturen auf einem beliebigen Substrat, wie z. B. einem Siliziumsubstrat, einen Glassubstrat oder einem Keramiksubstrat.

Die additive Technik erlaubt zudem, große unperforierte Flächen freizulegen, so daß massive Spiegelflächen mit Abmessungen bis zu einigen Millimetern hergestellt werden können. Als Einlagen-Galvanik ist die Technik kostengünstig und gut beherrschbar. Eine Mehrfachgalvanik ist ebenfalls durchführbar, um etwa die Verankerungsbereiche und die Spiegelfläche oder die Aufhängungen getrennt herzustellen. Durch entsprechend dicke Opferschichten lassen sich große Kippwinkel erreichen.

In den Unteransprüchen finden sich vorteilhafte Weiterbildungen und Verbesserungen des in Anspruch 1 angegebenen Herstellungsverfahrens, und zwar insbesondere für bewegliche Spiegelelemente in Verbindung mit den entsprechenden Spiegeldesigns.

Gemäß einer bevorzugten Weiterbildung wird als Verankerungsbereich ein metallisches Anschlußpad, vorzugsweise von einer in dem Substrat integrierten Schaltung, bereitgestellt. Es ist sowohl eine Herstellung als diskrete Vorrichtung als auch eine Herstellung in mit einer Betriebsschaltung integrierten Form möglich. Bei der Integration der mikromechanischen Vorrichtung auf einer integrierten Schaltung kann vorteilhafterweise die Metallisierung der integrierten Schaltung zur Verankerung verwendet werden.

Gemäß einer weiteren bevorzugten Weiterbildung wird als Opferschicht eine erste Fotolackschicht mit einer Dicke von einigen Mikrometern gebildet. Der Fotolack ist in einem isotropen Ätzprozeß leicht entfernbar. Bei Verwendung einer polymeren Opferschicht ist der Abstand des Spiegelelements zum Substrat sehr genau einstellbar wobei Abstände von einigen Mikrometern bis zu ungefähr 150 µm realisierbar sind.

Gemäß einer weiteren bevorzugten Weiterbildung wird die erste Fotolackschicht zum Freilassen des Verankerungsbereichs fotolithograpisch strukturiert.

Gemäß einer weiteren bevorzugten Weiterbildung wird die Haftschicht aufgesputtert.

Gemäß einer weiteren bevorzugten Weiterbildung ist die Haftschicht eine einige Nanometer dicke leitfähige Schicht aus Cu-Cr. Das Chrom dient als Haftschicht zum darunterliegenden Fotolack, das Kupfer als Startschicht für die nachfolgende galvanische Abscheidung. Andere Haftschichten, wie z.B. Cr-Au usw., sind selbstverständlich auch möglich.

Gemäß einer weiteren bevorzugten Weiterbildung wird die Maske auf der Haftschicht durch folgende Schritte gebildet: Bilden einer zweiten Fotolackschicht auf der Haftschicht; Bilden einer Siliziumdioxidschicht auf der zweiten Fotolackschicht; fotolithographisches Strukturieren einer dritten Fotolackschicht und Plasmaätzen der Siliziumdioxidschicht zur Ausbildung einer Hartmaske für die zweite Fotolackschicht und Ätzen der durch die strukturierte Siliziumdioxidschicht maskierten zweiten Fotolackschicht bis zur Haftschicht. Dabei dient die zweite Fotolackschicht als polymere Negativform für die galvanische Abscheidung.

Gemäß einer weiteren bevorzugten Weiterbildung wird als Galvanikschicht eine Nickelschicht oder eine Nickel-Cobaltschicht abgeschieden. Derartige Schichten lassen sich spannungsfrei, glatt und mit gutem Reflexionsvermögen herstellen.

Gemäß einer weiteren bevorzugten Weiterbildung werden die Opferschicht in Form der ersten Fotolackschicht, die durch die zweite Fotolackschicht gebildete Polymerform und die Haftschicht nach Abscheiden der Galvanikschicht entfernt.

Gemäß einer weiteren bevorzugten Weiterbildung ist die mikromechanische Vorrichtung ein Schwingspiegel, der derart gestaltet ist, daß er mindestens um eine Achse Torsionsschwingungen ausführen kann. Der Schwingspiegel kann als einfacher Kippspiegel sowie bei Verwendung einer dickeren Opferschicht in Resonanz als Scan-Spiegel betrieben werden. Die Schwingspiegel können derart gestaltet sein, daß sie in einer, zwei oder beliebig vielen Richtungen verkippbar sind.

Gemäß einer weiteren bevorzugten Weiterbildung wird auf dem Substrat unter der Spiegelfläche eine Gegenelektrode vorgesehen.

Gemäß einer weiteren bevorzugten Weiterbildung ist der Schwingspiegel derart gestaltet, daß er um vier oder mehr Achsen Torsionsschwingungen ausführen kann.

Gemäß einer weiteren bevorzugten Weiterbildung ist der Schwingspiegel derart gestaltet, daß er an einem umlaufenden Rahmen aufgehängt ist, der in dem Verankerungsbereich verankert ist. So ist ein ununterbrochener bzw. unausgesparter Spiegelbereich realisierbar.

Gemäß einer weiteren bevorzugten Weiterbildung ist der Schwingspiegel derart gestaltet, daß der Verankerungsbereich in einer Aussparung der Spiegelfläche vorgesehen ist.

### ZEICHNUNGEN

Ausführungsbeispiele der Erfindung sind in den Zeichnungen dargestellt und in der nachfolgenden Beschreibung näher erläutert.

Es zeigen:
- Fig. 1a-g: eine Darstellung der Prozeßschritte einer ersten Ausführungsform des erfindungsgemäßen Herstellungsverfahrens für eine mikromechanische Vorrichtung im Querschnitt;
- Fig. 2: ein erstes Beispiel eines mikromechanischen Schwingspiegels, der gemäß dem erfindungsgemäßen Herstellungsverfahren herstellbar ist, in Draufsicht;
- Fig. 3: ein zweites Beispiel eines mikromechanischen Schwingspiegels, der gemäß dem erfindungsgemäßen Herstellungsverfahren herstellbar ist, in Draufsicht;
- Fig. 4: ein drittes Beispiel eines mikromechanischen Schwingspiegels, der gemäß dem erfindungsgemäßen Herstellungsverfahren herstellbar ist, in Draufsicht;
- Fig. 5: ein viertes Beispiel eines mikromechanischen Schwingspiegels, der gemäß dem erfindungsgemäßen Herstellungsverfahren herstellbar ist, in Draufsicht;
- Fig. 6: ein fünftes Beispiel eines mikromechanischen Schwingspiegels, der gemäß dem erfindungsgemäßen Herstellungsverfahren herstellbar ist, in Draufsicht; und
- Fig. 7: ein sechstes Beispiel eines mikromechanischen Schwingspiegels, der gemäß dem erfindungsgemäßen Herstellungsverfahren herstellbar ist, in Querschnittsansicht.

### BESCHREIBUNG DER AUSFÜHRUNGSBEISPIELE

In den Figuren bezeichnen gleiche Bezugszeichen gleiche oder funktionsgleiche Elemente.

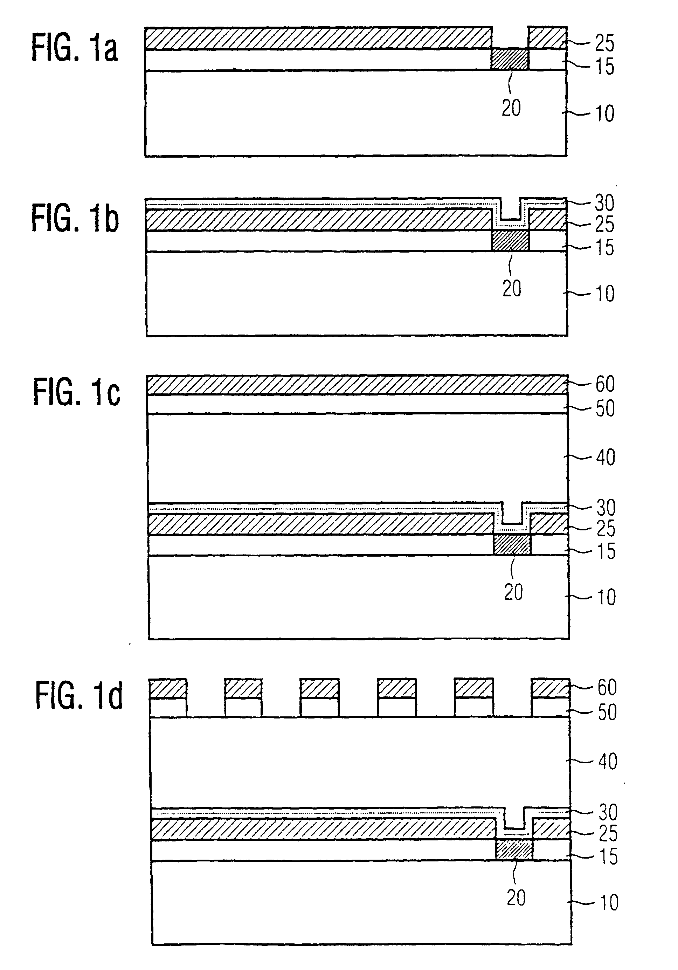

Fig. 1a-g zeigen eine Darstellung der Prozeßschritte einer ersten Ausführungsform des erfindungsgemäßen Herstellungsverfahrens für eine mikromechanische Vorrichtung im Querschnitt.

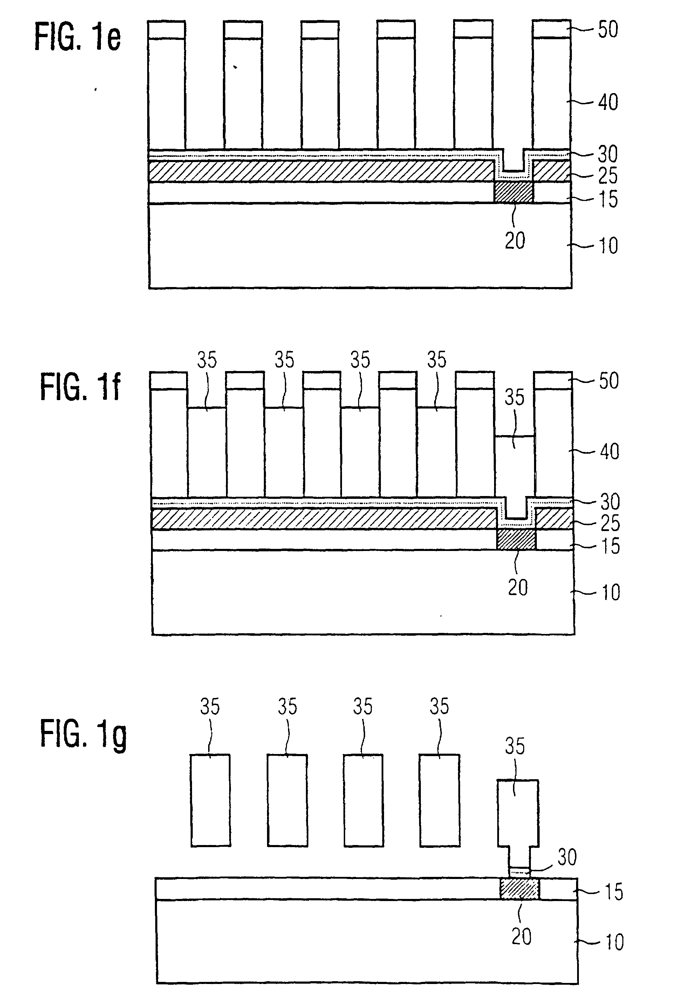

In Figur 1 bezeichnet 10 ein Substrat mit einer fertigprozessierten Betriebsschaltung, welches eine Passivierungsschicht 15 mit darin eingebetteten geöffneten Anschlußpads 20 aufweist. 25 bezeichnet eine Opferschicht in Form einer ersten Fotolackschicht, 30 eine Haftschicht in Form einer aufgesputterten Galvanik-Startschicht (Plating Base), 40 eine zweite Fotolackschicht, 50 eine Siliziumdioxidschicht, 60 eine dritte Fotolackschicht und 35 eine Galvanikschicht in Form einer Nickelgalvanik.

Ausgangspunkt zur Herstellung der mikromechanischen Vorrichtung gemäß der ersten Ausführungsform der vorliegenden Erfindung ist die fertigprozessierte Betriebsschaltung mit der Passivierungsschicht 15 und dem geöffneten Anschlußpad 20.

Wie in Figur 1a illustriert, wird in einem ersten Schritt eine erste Fotolackschicht als Opferschicht 25 aufgebracht und derart strukturiert, daß das Anschlußpad 20 freiliegt. Dieses Anschlußpad 20 dient als Verankerungsbereich für die herzustellende mikromechanische Vorrichtung. Zweckmäßigerweise kann die erste Fotolackschicht 25 sowohl zur Öffnung des Anschlußpads 20 als auch als Opferschicht dienen, falls die Öffnung des Anschlußpads 20 in der Passivierungsschicht 15 zunächst erfolgen muß.

Wie in Figur 1b gezeigt, wird in einem nächsten Schritt die Haftschicht 30 in Form einer Galvanik-Startschicht (Plating Base) aufgesputtert. Beim vorliegenden Beispiel handelt es sich um eine leitfähige Schicht aus Chrom-Kupfer. Das Chrom sorgt dabei für die Haftung zur darunterliegenden ersten Fotolackschicht 25, das Kupfer dient als Startschicht für den nachfolgenden Schritt der galvanischen Abscheidung.

Wie in Figur 1c dargestellt, wird auf die Haftschicht 30 eine ca. 15 µm dicke zweite Fotolackschicht 40 aufgeschleudert und bei Temperaturen von typischerweise 200°C ausgehärtet.

Mittels dem Plasma-CVD-Verfahren (CVD = chemische Dampfphasenabscheidung) wird auf der zweiten Fotolackschicht 40 eine etwa 600 nm dicke Siliziumdioxidschicht 50 abgeschieden. Die Siliziumdioxidschicht 50 dient im folgenden als Hartmaske zur Strukturierung der darunterliegenden zweiten Fotolackschicht 40 und wird zu diesem Zweck mittels eines fotolitographischen Prozesses unter Verwendung einer dritten Fotolackschicht 60 und durch anschließlendes Plasmaätzen strukturiert, wie in Figur 1d gezeigt.

Nach Überätzen der Siliziumdioxidschicht 50 erfolgt ein Trenchätzen der zweiten Fotolackschicht 40 durch einen anisotropen Plasmaätzprozess. Die daraus resultierende Struktur ist in Figur 1e gezeigt.

In die so entstandene, durch die zweite Fotolackschicht 40 gebildete Polymer-Negativform wird eine mehrere Mikrometer dicke Nickelgalvanik abgeschieden. Daraus ergibt sich die in Figur 1f und 1g gezeigte Kammstruktur. Dazu sei bemerkt, daß die einzelnen Bereiche der zweiten Galvanikschicht 35 an in dieser Querschnittsdarstellung nicht sichtbaren Bereichen zusammenhängen.

Anschließend werden die Siliziumdioxidschicht 50 durch naßchemisches Ätzen und die Polymer-Negativform in Form der strukturierten zweiten Fotolackschicht 40 durch trockenchemisches Ätzen entfernt.

Es folgt ein selektives naßchemisches Ätzen der Haftschicht 30 sowie ein Ätzen der Opferschicht in Form der erster. Fotolackschicht 25 in einem Plasma, woraus sich die in Figur 1g gezeigte Struktur ergibt.

Das Entfernen der Opferschicht 25 in Form der ersten Fotolackschicht ist ein isotroper Ätzprozess, wobei der Fotolack unter den Nickelkämmen 35 vollständig entfernt wird.

Das Ergebnis ist eine kapazitive betreibbare mikromechanische Vorrichtung mit frei beweglichen Strukturen, wie Figur 1g entnehmbar ist.

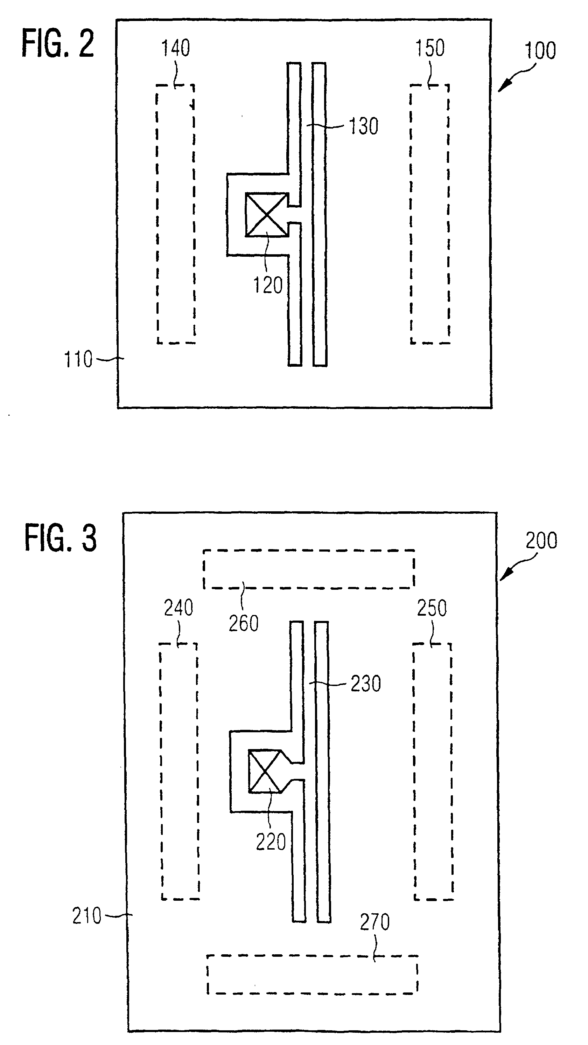

Fig. 2 ist ein erstes Beispiel eines mikromechanischen Schwingspiegels, der gemäß dem erfindungsgemäßen Herstellungsverfahren herstellbar ist, in Draufsicht.

In Figur 2 bezeichnet 100 allgemein eine erste Spiegelform, 110 eine Spiegelfläche, 120 einen Verankerungsbereich, 130 eine Torsionsfederaufhängung und 140, 150 Gegenelektroden, welche unterhalb der Spiegelfläche 110 auf dem Substrat vorgesehen sind.

Insbesondere sind bei der ersten Spiegelform 100 die Verankerung und die Aufhängung im Innenbereich in der Spiegelfläche 110 vorgesehen. Die Spiegelfläche 110 ist zur Aufhängung an der Torsionsfederaufhängung 130 angebracht. Diese Aufhängung ist vollkommen spannungs- und temperaturkompensiert, was im Falle von Metallbauteilen auf Silizium usw. zweckmäßig ist. Anderenfalls kommt es nämlich zu Verbiegungen der Federstäbe oder Spiegelelemente, was in der Regel einen Funktionsausfall mit sich bringt. Über die Geometrie der Torsionsfederaufhängung 130 kann die Resonanzfrequenz des Schwingspiegels mit der Spiegelform 100 eingestellt werden, wenn ein Einsatz als Scanner beabsichtigt ist.

Fig. 3 ist ein zweites Beispiel eines mikromechanischen Schwingspiegels, der gemäß dem erfindungsgemäßen Herstellungsverfahren herstellbar ist, in Draufsicht.

In Figur 3 bezeichnet 200 eine zweite Spiegelform, 210 eine Spiegelfläche, 220 einen Verankerungsbereich, 230 eine Torsionsfederaufhängung und 240, 250, 260, 270 Gegenelektroden welche unterhalb der Spiegelfläche 210 auf dem Substrat vorgesehen sind.

Auch bei dieser zweiten Spiegelform 200 sind die Verankerung und die Aufhängung innen im Bereich der Spiegelfläche 210 vorgesehen, doch im Unterschied zum obigen ersten Beispiel ist hier aufgrund zweier weiterer Gegenelektroden eine Auslenkung um zwei, zueinander senkrecht stehender Achsen möglich. Hinsichtlich der zweiten Achse wirkt die Torsionsfederaufhängung 230 nicht als Torsionsstab, sondern als normale Biegefeder.

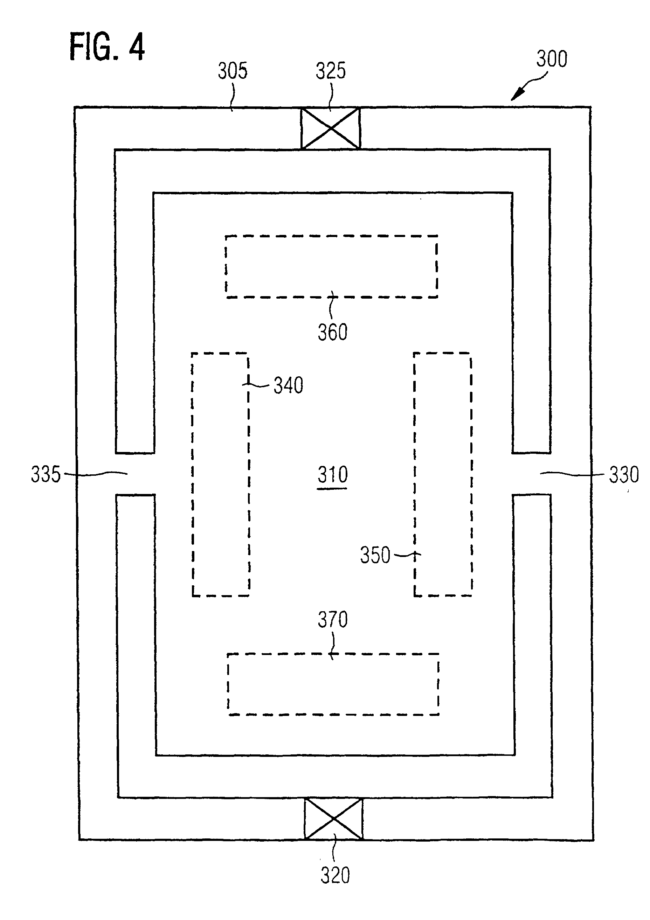

Fig. 4 ist ein drittes Beispiel eines mikromechanischen Schwingspiegels, der gemäß dem erfindungsgemäßen Herstellungsverfahren herstellbar ist, in Draufsicht.

In Figur 4 bezeichnet 300 eine dritte Spiegelform, 305 einen Rahmen, 310 eine Spiegelfläche, 320, 325, einen Verankerungsbereich, 330, 335 eine Torsionsfederaufhängung und 340, 350, 360, 370 Elektroden, welche unterhalb der Spiegelfläche 310 auf dem Substrat vorgesehen sind.

Im Unterschied zum ersten und zum zweiten Beispiel ist bei diesem dritten Beispiel die Torsionsfederaufhängung 330, 335 über zwei Torsionsfedern realisiert, welche die Spiegelfläche 310 mit dem Rahmen 305 verbinden. Der Rahmen 305 ist seinerseits über die Verankerungen 320, 325 mit dem Substrat verbunden. Auch diese Bauform ist zweckmäßigerweise in bezug auf die Torsionsfederaufhängung 330, 335 und die Spiegelfläche 310 spannungs- und temperaturkompensiert.

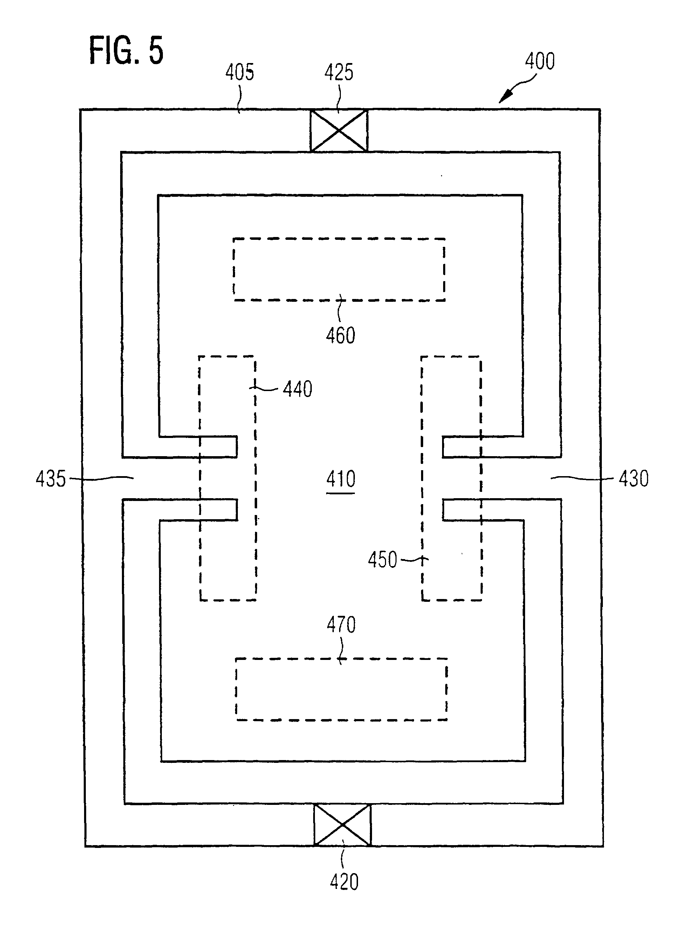

Fig. 5 ist ein viertes Beispiel eines mikromechanischen Schwingspiegels, der gemäß dem erfindungsgemäßen Herstellungsverfahren herstellbar ist, in Draufsicht.

In Figur 5 bezeichnet 400 eine vierte Spiegelform, 405 einen Rahmen, 410 eine Spiegelfläche, 425 einen Verankerungsbereich, 430, 435 eine Torsionsfederaufhängung und 440, 450, 460, 470 Gegenelektroden, welche unterhalb der Spiegelfläche 410 auf dem Substrat vorgesehen sind.

Im Unterschied zum dritten Beispiel nach Figur 4 ist bei diesem vierten Beispiel die Länge der Torsionsfedern 435, 430 in die Spiegelfläche 410 hineinragend verlängert. Dies ermöglicht eine Anpassung der gewünschten Resonanzfrequenz bei einer Verwendung als Scanner.

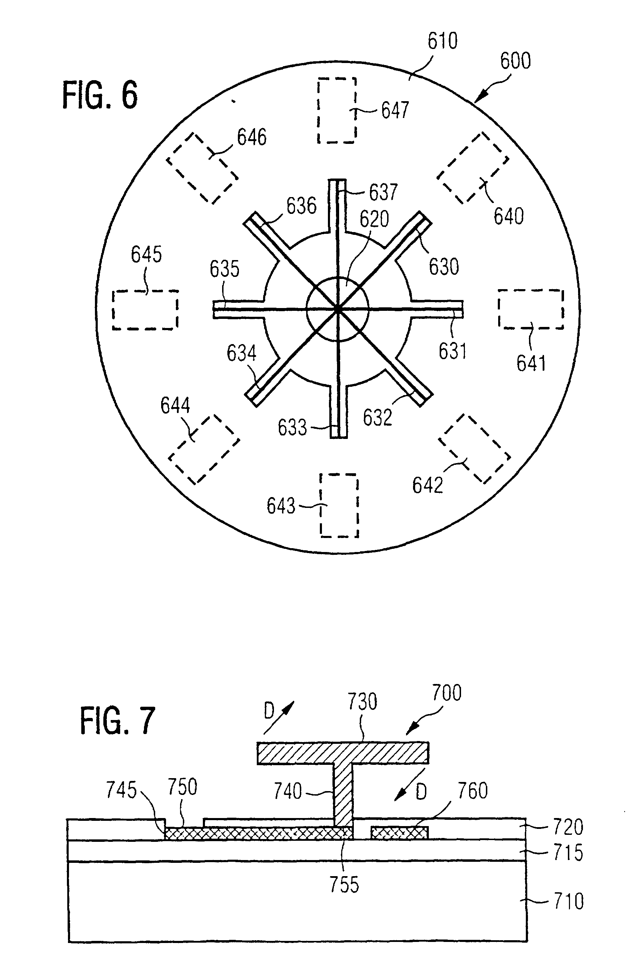

Fig. 6 ist ein fünftes Beispiel eines mikromechanischen Schwingspiegels, der gemäß dem erfindungsgemäßen Herstellungsverfahren herstellbar ist, in Draufsicht.

In Figur 6 bezeichnet 600 eine fünfte Spiegelform, 610 ein Spiegelfläche, 620 einen Verankerungsbereich, 630, 631, 632, 633, 634, 635, 636, 637 eine Torsionsfederaufhängung, 640, 641, 642, 643, 644, 645, 646, 647 Gegenelektroden, welche unterhalb der Spiegelfläche 610 auf dem Substrat vorgesehen sind.

Bei dem in Figur 6 gezeigten Beispiel ist es möglich, die Spiegelfläche 610, um acht Achsen zu verkippen. Der Verankerungsbereich 620 ist kreisförmig und befindet sich in der Mitte der ebenfalls kreisförmigen konzentrischen Spiegelfläche 610. Vom Verankerungsbereich 620 gehen die Torsionsfedern 630 - 637 der Torsionsfederaufhängung zu der ringförmigen Spiegelfläche 610 aus. Mittels einer (nicht dargestellten) Ansteuerung der darunter befindlichen Gegenelektroden 640 - 647 wird die Richtung der Verkippung vorgegeben. Bei Resonanzfrequenzen der Struktur im Bereich von 100 Hz bis zu einigen kHz ist es möglich, mit Hilfe dieser Spiegelform 600 Bilder mit einer Wiederholfrequenz im Bereich von 50 - 100 Hz zu projizieren. Dieses Beispiel ist selbstverständlich auf mehr als acht Achsen zur Verkippung verallgemeinerbar.

Fig. 7 ist ein sechstes Beispiel eines mikromechanischen Schwingspiegels, der gemäß dem erfindungsgemäßen Herstellungsverfahren herstellbar ist, und zeigt den prinzipiellen Aufbau der zuvor beschriebenen Designs in Querschnittsansicht.

In Figur 7 bezeichnet 700 eine sechste Spiegelform, 710 ein Substrat, 715 eine erste Isolierschicht, 720 eine zweite Isolierschicht, 730 eine Spiegelfläche, 740 eine Stütze, 745 eine Metallschicht, 750 ein Anschlußpad, 755 einen Verankerungsbereich, 760 eine Gegenelektrode und D eine Auslenkungsrichtung.

Im Gegensatz zur Ausführungsform nach Figur la-g ist bei der sechsten Spiegelform 700 die Verankerung im Verankerungsbereich 755 der Metallschicht 745 realisiert, wobei die Metallschicht 745 eine zusätzlich auf dem Substrat 710 unter Zwischensetzen der ersten Isolierschicht 715 aufgebrachte Schicht ist. Die Verbindung des Schwingspiegels mit der (nicht gezeigten) Betriebsschaltung erfolgt durch Bonden über das Anschlußpad 750. Die Gegenelektrode 760 dient zur Auslenkung dieses Schwingspiegels gemäß der sechsten Spiegelform 700 in der Auslenkungsrichtung D.

Obwohl das erfindungsgemäße Herstellungsverfahren vorstehend anhand bevorzugter Ausführungsbeispiele beschrieben wurde, ist es darauf nicht beschränkt, sondern auf vielfältige Art und Weise modifizierbar.

Insbesondere ist die Auswahl der Schichtmaterialien und die Dicke der aufgebrachten Schichten anwendungsspezifisch auswählbar.

### BEZUGSZEICHENLISTE:

| | |
|---|---|
| 10 | Substrat |
| 15 | Passivierungsschicht |
| 20 | Anschlußpad |
| 25 | Opferschicht, erste Fotolackschicht |
| 30 | Haftschicht |
| 40 | zweite Fotolackschicht |
| 50 | Siliziumdioxidschicht |
| 60 | dritte Fotolackschicht |
| 35 | Galvanikschicht |
| 100 | erste Spiegelform |
| 110 | Spiegelfläche |
| 120 | Verankerungsbereich |
| 130 | Torsionsfederaufhängung |
| 140,150 | Gegenelektroden |
| 200 | zweite Spiegelform |
| 210 | Spiegelfläche |
| 220 | Verankerungsbereich |
| 230 | Torsionsfederaufhängung |
| 240,250,260,270 | Gegenelektroden |
| 300 | dritte Spiegelform |
| 305 | Rahmen |
| 310 | Spiegelfläche |
| 320,325 | Verankerungsbereich |
| 330,335 | Torsionsfederaufhängung |
| 340,350,360,370 | Gegenelektroden |
| 400 | vierte Spiegelform |
| 405 | Rahmen |
| 410 | Spiegelfläche |
| 420,425 | Verankerungsbereich |
| 430,435 | Torsionsfederaufhängung |
| 440,450,460,470 | Gegenelektroden |
| 600 | fünfte Spiegelform |
| 610 | Spiegelfläche |
| 620 | Verankerungsbereich |
| 630-637 | Torsionsfederaufhängung |
| 640-647 | Gegenelektroden |
| 700 | sechste Spiegelform |
| 710 | Substrat |
| 715 | erste Isolierschicht |
| 720 | zweite Isolierschicht |
| 730 | Spiegelfläche |
| 740 | Stütze |
| 745 | Metallschicht |
| 750 | Anschlußpad |
| 755 | Verankerungsbereich |
| 760 | Gegenelektrode |
| D | Auslenkungsrichtung |

## Patentansprüche

1. Herstellungsverfahren für eine mikromechanische Vorrichtung (100; 200; 300; 400; 600; 700) mit den Schritten:
Bereitstellen eines Substrats (10; 710) mit einem Verankerungsbereich (20; 120; 220; 320, 325; 420, 425; 620; 755);
Bilden einer Opferschicht (25) auf dem Substrat (10; 710) unter Freilassen des Verankerungsbereichs (20; 120; 220; 320, 325; 420, 425; 620; 755);
Abscheiden einer Haftschicht (30) auf der Opferschicht (25) und dem Verankerungsbereich (20; 120; 220; 320, 325; 420, 425; 620; 755);
Bilden einer Maske (40, 50) auf der Haftschicht (30);
Abscheiden einer Galvanikschicht (35) auf dem unmaskierten Bereich der Haftschicht (30); und
Entfernen der Maske (40, 50) und der Opferschicht (25).

2. Verfahren nach Anspruch 1, **dadurch gekennzeichnet, daß** als Verankerungsbereich (20; 120; 220; 320, 325; 420, 425; 620; 755) ein metallisches Anschlußpad (20), vorzugsweise von einer in dem Substrat (10) integrierten Schaltung, bereitgestellt wird.

3. Verfahren nach einem der vorhergehenden Ansprüche, **dadurch gekennzeichnet, daß** als Opferschicht (25) eine erste Fotolackschicht (25) mit einer Dicke von einigen Mikrometern gebildet wird.

4. Verfahren nach Anspruch 3, **dadurch gekennzeichnet, daß** die erste Fotolackschicht (25) zum Freilassen des Verankerungsbereichs (20; 120; 220; 320, 325; 420, 425; 620; 755) fotolithograpisch strukturiert wird.

5. Verfahren nach einem der vorhergehenden Ansprüche, **dadurch gekennzeichnet, daß** die Haftschicht (30) aufgesputtert wird.

6. Verfahren nach Anspruch 5, **dadurch gekennzeichnet, daß** die Haftschicht (30) eine einige 100 nm dicke leitfähige Schicht aus Cu-Cr oder Au-Cr ist.

7. Verfahren nach einem der vorhergehenden Ansprüche, **dadurch gekennzeichnet, daß** die Maske (40, 50) auf der Haftschicht (30) durch folgende Schritte gebildet wird:
Bilden einer zweiten Fotolackschicht (40) auf der Haftschicht (30);
Bilden einer Siliziumdioxidschicht (50) auf der zweiten Fotolackschicht (40);
fotolithographisches Strukturieren einer dritten Fotolackschicht (60) und Plasmaätzen der Siliziumdioxidschicht (50) zur Ausbildung einer Hartmaske für die zweite Fotolackschicht (40); und
Ätzen der durch die strukturierte Siliziumdioxidschicht (50) maskierten zweiten Fotolackschicht (40) bis zur Haftschicht (30).

8. Verfahren nach einem der vorhergehenden Ansprüche, **dadurch gekennzeichnet, daß** als Galvanikschicht (35) eine Nickelschicht oder eine Nickel-Cobaltschicht abgeschieden wird.

9. Verfahren nach einem der vorhergehenden Ansprüche, **dadurch gekennzeichnet, daß** die erste und zweite Fotolackschicht (25, 40) und die Haftschicht (30) nach Abscheiden der Galvanikschicht (35) entfernt werden.

10. Verfahren nach einem der vorhergehenden Ansprüche, **dadurch gekennzeichnet, daß** die mikromechanische Vorrichtung (100; 200; 300; 400; 600; 700) ein Schwingspiegel ist, der derart gestaltet ist, daß er mindestens um eine Achse Torsionsschwingungen ausführen kann.

11. Verfahren nach Anspruch 10, **dadurch gekennzeichnet, daß** auf dem Substrat (710) unter der Spiegelfläche (730) eine Gegenelektrode (760) vorgesehen wird.

12. Verfahren nach Anspruch 10 oder 11, **dadurch gekennzeichnet, daß** der Schwingspiegel derart gestaltet ist, daß er um vier oder mehr Achsen Torsionsschwingungen ausführen kann.

13. Verfahren nach einem der Ansprüche 10 bis 12, **dadurch gekennzeichnet, daß** der Schwingspiegel derart gestaltet ist, daß er an einem umlaufenden Rahmen (305, 405) aufgehängt ist, der in dem Verankerungsbereich (320, 325; 420, 425) verankert ist.

14. Verfahren nach einem der Ansprüche 10 bis 12, **dadurch gekennzeichnet, daß** der Schwingspiegel derart gestaltet ist, daß der Verankerungsbereich (120; 220) in einer Aussparung der Spiegelfläche (110; 210) vorgesehen ist.

## Claims

1. Method for fabricating a micromechanical device (100; 200; 300; 400; 600; 700) having the steps of:
providing a substrate (10; 710) having an anchoring region (20; 120; 220; 320, 325; 420, 425; 620; 755);
forming a sacrificial layer (25) on the substrate (10; 710) with the anchoring region (20; 120; 220; 320, 325; 420, 425; 620; 755) being left free;
depositing an adhesion layer (30) on the sacrificial layer (25) and the anchoring region (20; 120; 220; 320, 325; 420, 425; 620; 755);
forming a mask (40, 50) on the adhesion layer (30);
depositing an electroplating layer (35) on the unmasked region of the adhesion layer (30); and
removing the mask (40, 50) and the sacrificial layer (25).

2. Method according to Claim 1, **characterized in that** a metallic connection pad (20), preferably of a circuit integrated in the substrate (10), is provided as the anchoring region (20; 120; 220; 320, 325; 420, 425; 620; 755).

3. Method according to one of the preceding claims, **characterized in that** a first photoresist layer (25) having a thickness of a few micrometres is formed as the sacrificial layer (25).

4. Method according to Claim 3, **characterized in that** the first photoresist layer (25) is patterned photolithographically for the purpose of leaving free the anchoring region (20; 120; 220; 320, 325; 420, 425; 620; 755).

5. Method according to one of the preceding claims, **characterized in that** the adhesion layer (30) is applied by sputtering.

6. Method according to Claim 5, **characterized in that** the adhesion layer (30) is a conductive layer made of Cu-Cr or Au-Cr and having a thickness of a few 100 nm.

7. Method according to one of the preceding claims, **characterized in that** the mask (40, 50) is formed on the adhesion layer (30) by means of the following steps:
formation of a second photoresist layer (40) on the adhesion layer (30);
formation of a silicon dioxide layer (50) on the second photoresist layer (40);
photolithographic patterning of a third photoresist layer (60) and plasma etching of the silicon dioxide layer (50) for the purpose of forming a hard mask for the second photoresist layer (40); and
etching of the second photoresist layer (40), which is masked by the patterned silicon dioxide layer (50) as far as the adhesion layer (30).

8. Method according to one of the preceding claims, **characterized in that** a nickel layer or a nickel-cobalt layer is deposited as the electroplating layer (35).

9. Method according to one of the preceding claims, **characterized in that** the first and second photoresist layers (25, 40) and the adhesion layer (30) are removed after the deposition of the electroplating layer (35).

10. Method according to one of the preceding claims, **characterized in that** the micromechanical device (100; 200; 300; 400; 600; 700) is an oscillating mirror which is configured in such a way that it can perform torsional oscillations at least at one axis.

11. Method according to Claim 10, **characterized in that** a counterelectrode (760) is provided on the substrate (710) below the mirror surface (730).

12. Method according to Claim 10 or 11, **characterized in that** the oscillating mirror is configured in such a way that it can perform torsional oscillations at four or more axes.

13. Method according to one of Claims 10 to 12,
**characterized in that** the oscillating mirror is configured in such a way that it is suspended from a peripheral frame (305, 405) anchored in the anchoring region (320, 325; 420, 425).

14. Method according to one of Claims 10 to 12,
**characterized in that** the oscillating mirror is configured in such a way that the anchoring region (120; 220) is provided in a cutout in the mirror surface (110; 210).

## Revendications

1. Procédé de fabrication d'un dispositif micromécanique (100 ; 200 ; 300 ; 400 ; 600 ; 700) comprenant les étapes suivantes :
- on réalise un substrat (10 ; 710) avec une zone d'ancrage, (20 ; 120 ; 220 ; 320, 325 ; 420, 425 ; 620 ; 755),
- on forme une surface sacrifiée (25) sur le substrat (10 ; 710) en laissant libre la zone d'ancrage (20 ; 120 ; 220 ; 320, 325 ; 420, 425 ; 620 ; 755),
- on dépose une couche d'accrochage (30) sur la couche sacrifiée (25) et sur la zone d'ancrage (20 ; 120 ; 220 ; 320, 325 ; 420, 425 ; 620 ; 755),
- on forme un masque (40, 50) sur la couche d'accrochage (30),
- on dépose une couche galvanique (35) sur la zone non masquée de la couche d'accrochage (30) et
- on enlève le masque (40, 50) et la couche sacrifiée (25).

2. Procédé selon la revendication 1,
**caractérisé en ce que**
comme zone d'ancrage (20 ; 120 ; 220 ; 320, 325 ; 420, 425 ; 620 ; 755), on fournit une patte de branchement métallique (20), de préférence d'un circuit intégré dans le substrat (10).

3. Procédé selon l'une quelconque des revendications précédentes,
**caractérisé en ce que**
comme couche sacrifiée (25) on forme une première couche de photolaque (25) d'une épaisseur de quelques microns.

4. Procédé selon la revendication 3,
**caractérisé en ce qu'**
on structure la première couche de photolaque (25) par photolithogravure pour laisser libre la zone d'ancrage (20 ; 120 ; 220 ; 320, 325 ; 420, 425 ; 620 ; 755).

5. Procédé selon l'une quelconque des revendications précédentes,
**caractérisé en ce qu'**
on réalise la couche d'accrochage (30) par pulvérisation.

6. Procédé selon la revendication 5,
**caractérisé en ce que**
la couche d'accrochage (30) est une couche conductrice en Cu-Cr ou Au-Cr de seulement quelques 100 nm d'épaisseur.

7. Procédé selon l'une quelconque des revendications précédentes,
**caractérisé en ce qu'**
on forme le masque (40, 50) sur la couche d'accrochage (30) par les étapes suivantes :
- on forme une seconde couche de photolaque (40) sur la couche d'accrochage (30),
- on forme une couche de dioxyde de silicium (50) sur la seconde couche de photolaque (40),
- on structure par photolithogravure une troisième couche de photolaque (60) et on attaque au plasma la couche de dioxyde de silicium (50) pour former un masque dur pour la seconde couche de photolaque (40), et
- on attaque la seconde couche de photolaque (40) masquée par la couche de dioxyde de silicium (50), structurée, jusqu'à la couche d'accrochage (30).

8. Procédé selon l'une quelconque des revendications précédentes,
**caractérisé en ce que**
comme couche galvanique (35) on dépose une couche de nickel ou une couche de nickel-cobalt.

9. Procédé selon l'une quelconque des revendications précédentes,
**caractérisé en ce qu'**
on enlève la première et la seconde couche de photolaque (25, 40) et la couche d'accrochage (30) après dépôt de la couche galvanique (35).

10. Procédé selon l'une quelconque des revendications précédentes,
**caractérisé en ce que**
le dispositif micromécanique (100 ; 200 ; 300 ; 400 ; 600 ; 700) est un miroir oscillant conçu pour présenter des oscillations de torsion autour d'au moins un axe.

11. Procédé selon la revendication 10,
**caractérisé en ce qu'**
on réalise une contre électrode (760) sur le substrat (710) sous la surface réfléchissante (730).

12. Procédé selon l'une quelconque des revendications 10 ou 11,
**caractérisé en ce que**
le miroir oscillant est conçu pour effectuer des oscillations de torsion autour de quatre axes au moins.

13. Procédé selon l'une quelconque des revendications 10 à 12,
**caractérisé en ce que**
le miroir oscillant est conçu pour être suspendu à un cadre tournant (305, 405) accroché dans la zone d'ancrage (320, 325 ; 420, 425).

14. Procédé selon l'une quelconque des revendications 10 à 12,
**caractérisé en ce que**
le miroir oscillant est conçu pour que la zone d'ancrage (120 ; 220) soit prévue dans une cavité de la surface réfléchissante (110 ; 210).
